# EUROPÄISCHE PATENTANMELDUNG

(11) **EP 1 629 956 A1**
(43) Veröffentlichungstag der Anmeldung: **01.03.2006**
(21) Anmeldenummer: 05016764.2
(22) Anmeldetag: 02.08.2005
(51) Int. Cl.: B29C 45/16, B29C 45/14

(54) **Verfahren und Vorrichtung zur Herstellung von Zierteilen**

(30) Priorität: 24.08.2004 DE 102004040942
(71) Anmelder: Lisa Dräxlmaier GmbH, 84137 Vilsbiburg (DE)
(72) Erfinder: Lang, Sven, 76669 Bad Schönborn (DE); Schweigert, Dieter, 79353 Bahlingen (DE)
(74) Vertreter: HOFFMANN EITLE

(57) **Zusammenfassung**

Vorrichtung zum Herstellen von Zierteilen (43), insbesondere für Fahrzeuge, umfassend
ein erstes Werkzeug (10);
ein zweites Werkzeug (20), das relativ zu dem ersten Werkzeug beweglich ist, so dass die Vorrichtung in eine geöffnete und eine geschlossene Stellung bringbar ist, wobei das zweite Werkzeug einen Rahmen (21) und einen relativ zu dem Rahmen beweglichen formgebenden, wechselbaren Kern (22,23) aufweist; und
eine Klemmeinrichtung (30), die derart angeordnet und beweglich ist, dass der gesamte Umfangsbereich (44) eines Werkstücks (40) durch die Klemmeinrichtung an dem Rahmen (21) des zweiten Werkzeugs (20) festlegbar ist. Darüber hinaus schlägt die vorliegende Erfindung auch ein entsprechendes Verfahren vor.

## Beschreibung

### Gebiet der Erfindung

Die vorliegende Erfindung betrifft ein Verfahren und eine Vorrichtung zum Herstellen von Zierteilen mit einer Sichtseite und einer Trägerseite, wie beispielsweise Innenverkleidungsteile, Abdeckungen und ähnliches. Unter einem Zierteil im Sinne der vorliegenden Erfindung versteht sich ein Teil, das einen Dekorwerkstoff, wie zum Beispiel Holzfurnier, Folie, Textil, Leder, etc. enthält, der von der Sichtseite des Zierteils her das Erscheinungsbild des Zierteils aufwertet. Derartige Zierteile werden insbesondere in der Automobilindustrie eingesetzt, finden jedoch auch in anderen Fahrzeugen wie beispielsweise Flugzeugen, Zügen oder Schiffen eine entsprechende Anwendung.

### Stand der Technik

Die eingangs beschriebenen Zierteile werden in der Regel derart hergestellt, dass ein bereits vorgeformter Dekorwerkstoffvorformling zunächst in eine erste Spritzgießeinrichtung eingelegt wird, um den Dekorwerkstoffvorformling zu hinterspritzen, das heißt auf seiner Trägerseite eine Trägerschicht aus Kunstharz aufzubringen. In einem nächsten Schritt wird das Zierteil in eine zweite Spritzgießvorrichtung transferiert und in dieser Vorrichtung überspritzt, das heißt es wird eine vorzugsweise transparente Kunstharzschicht auf der Sichtseite des Dekorwerkstoffvorformlings aufgebracht. Somit besteht das herzustellende Zierteil im Wesentlichen aus drei Schichten, nämlich der Dekorwerkstoffschicht, der Kunstharzschicht auf der Sichtseite der Dekorschicht und der Trägerschicht auf der Trägerseite der Dekorschicht.

Derartige Zierteile und die zuvor beschriebene Herstellungsweise sind beispielsweise in der DE 41 24 297 C2 und der DE 43 01 444 C2 beschrieben.

Wie es eingangs beschrieben wurde, wird beim Herstellen derartiger Zierteile zunächst der Dekorwerkstoff umgeformt, der daraus resultierende Dekorwerkstoffvorformling dann in ein erstes Spritzgießwerkzeug eingelegt. Im Anschluss erfolgt ein Wechsel des Zwischenprodukts in ein zweites Spritzgießwerkzeug und abschließend ein Beschneidungsvorgang. Um einen derartigen Herstellungsprozess zu vereinfachen, ist angedacht, die oben genannten Verfahrensschritte alle in einem Werkzeug durchzuführen. Eine Vorrichtung bzw. ein Verfahren zum Herstellen eines zuvor erwähnten, im Wesentlichen dreiteiligen Zierteils ist im Stand der Technik jedoch bisher nicht bekannt.

Allerdings offenbart die DE 43 36 550 C2 ein Verfahren zur Herstellung von Innenbauteilen für Kraftfahrzeuge und eine entsprechende Vorrichtung bei der bzw. dem ein Verformen, Spritzgießen und Beschneiden in einem Werkzeug durchgeführt wird. Die DE 43 36 550 C2 definiert ein derartiges Innenbauteil jedoch als aus einem Trägermaterial bestehend, das einem biegeschlaffen Dekormaterial wie beispielsweise Leder, Stoff oder Teppich, seine Formsteifheit verleiht. Derartige Dekormaterialien sind jedoch in der Regel auf ihrer Sichtseite nicht mit einer zusätzlichen transparenten Kunststoffschicht versehen, wie die eingangs beschriebenen Zierteile, auf deren Herstellung sich die vorliegende Erfindung bezieht. Folglich offenbart die DE 43 36 550 C2 kein Überspritzen von Innenverkleidungsteilen. Ferner lehrt die DE 43 36 550 C2 nicht, wie ein Beschneiden des Innenbauteils in der gleichen Vorrichtung tatsächlich abläuft oder dass gar die Außenkontur des Innenbauteils auf Endmaß beschnitten werden könnte.

### Zusammenfassung der Erfindung

Ausgehend von den obigen Ausführungen liegt das technische Problem der vorliegenden Erfindung darin, ein Verfahren und eine Vorrichtung zur Herstellung von Zierteilen, insbesondere für Kraftfahrzeuge, bereitzustellen, das bzw. die es ermöglicht, im Wesentlichen dreiteilige Zierteile der eingangs beschriebenen Art in nur einer Vorrichtung herzustellen, ohne das Werkstück zwischen den Schritten zu einer anderen Vorrichtung transferieren zu müssen und dennoch zu ermöglichen, die gesamte Außenkontur des Zierteils in der gleichen Vorrichtung auf einfache Art und Weise zu beschneiden, wobei das Verfahren und die Vorrichtung möglichst kompakt und einfach ausgestaltet sein sollten.

Dieses Problem wird durch ein erfindungsgemäßes Verfahren mit den Merkmalen des Patentanspruchs 1 sowie eine erfindungsgemäße Vorrichtung mit den Merkmalen des Patentanspruchs 5 gelöst.

Der Grundgedanke der vorliegenden Erfindung liegt darin, ein einfach durchzuführendes Verfahren und eine einfach aufgebaute Vorrichtung bereitzustellen, die es ermöglicht, ein Verformen, Über- und Hinterspritzen sowie ein Beschneiden der gesamten Außenkontur zur Herstellung eines Zierteils in einer Vorrichtung zu realisieren. Ob zunächst überspritzt und dann hinterspritzt wird oder umgekehrt, spielt bei der vorliegenden Erfindung keine Rolle.

Zu diesem Zweck umfasst das erfindungsgemäße Verfahren die Schritte:

Einlegen eines ebenen, biegsamen Dekorrohlings aus einem Dekorwerkstoff mit einer Sichtseite und einer Trägerseite als das zu bearbeitende Werkstück in eine Vorrichtung, lagegenaues Festlegen des Werkstücks in der Vorrichtung, wobei der gesamte Umfangsbereich bzw. ein Teil der Kontur des Werkstücks eingespannt wird. Während des Festlegens oder nach dem Festlegen wird das Werkstück in der gleichen Vorrichtung umgeformt. Im Anschluss erfolgen ein Überspritzen der Sichtseite des Werkstücks mit Kunstharz und ein Hinterspritzen der Trägerseite des Werkstücks ebenfalls in der gleichen Vorrichtung. Das Beschneiden des Werkstücks über den gesamten Umfang bzw. entlang der Kontur des zu erreichenden Zierteils wird durch eine Relativbewegung des festgelegten Umfangsbereichs des Werkstücks zu dem innerhalb des Umfangsbereichs gelegenen verbleibenden Bereich des Werkstücks erzielt.

Die erfindungsgemäße Vorrichtung zum Herstellen von Zierteilen umfasst entsprechend ein erstes Werkzeug bzw. eine erste Werkzeughälfte und ein zweites Werkzeug bzw. eine zweite Werkzeughälfte. Das zweite Werkzeug ist relativ zu dem ersten Werkzeug beweglich, so dass die Vorrichtung in eine geöffnete und eine geschlossene Stellung bringbar ist. Ferner weist das zweite Werkzeug einen Rahmen und einen relativ zu dem Rahmen beweglichen formgebenden, wechselbaren Kern auf. Unter einem formgebenden Kern im Sinne der vorliegenden Erfindung ist ein Kern zu verstehen, der entsprechend mit dem Gegenstück des ersten Werkzeugs einen Formenhohlraum zum Spritzgießen bildet oder als formgebendes Werkzeug zum Umformen eines Werkstücks dient. Um in der gleichen Vorrichtung ein Hinterspritzen sowie auch ein Überspritzen durchführen zu können, muss dieser formgebende Kern wechselbar sein, da entsprechend dem Überspritzen und dem Hinterspritzen zwei unterschiedliche Formenhohlräume auszubilden sind. Ferner umfasst die erfindungsgemäße Vorrichtung eine Klemmeinrichtung, die derart angeordnet und beweglich ist, dass der gesamte Umfangsbereich eines Werkstücks durch die Klemmeinrichtung an dem Rahmen des zweiten Werkzeugs festlegbar ist. Die Klemmeinrichtung in Verbindung mit dem Rahmen des zweiten Werkzeugs hält entsprechend dem erfindungsgemäßen Verfahren den gesamten Umfangsbereich des Werkstücks, während der Kern relativ zu dem Rahmen beweglich ist und durch eine Bewegung gegenüber dem Rahmen das Beschneiden des Werkstücks über den gesamten Umfang bewirkt.

Vorteilhafte Weiterbildungen des erfindungsgemäßen Verfahrens sowie der erfindungsgemäßen Vorrichtung finden sich in den Unteransprüchen.

So wird bei dem Verfahren vorzugsweise ein Dekorrohling aus einem Holzfurnier, einem Steinfurnier, einer Folie oder einem beliebigen anderen Dekormaterial in die Vorrichtung eingelegt. Derartige Dekorwerkstoffe werden in der Regel zur Herstellung der eingangs beschriebenen Zierteile verwendet, das heißt sowohl über- als auch hinterspritzt.

Vorteilhafterweise wird bei dem erfindungsgemäßen Verfahren durch die Relativbewegung des festgelegten Umfangsbereichs des Werkstücks zu dem innerhalb des Umfangsbereichs gelegenen verbleibenden Bereichs des Werkstücks nach dem Abschluss des Beschneidens das Werkstück bzw. das fertige Zierteil ausgeworfen. Deshalb ist ein manuelles Entfernen des Zierteils aus der Vorrichtung nicht erforderlich.

Darüber hinaus ist es bei dem Verfahren bevorzugt, dass die Relativbewegung entlang einer Achse erfolgt und alle beweglichen Teile der Vorrichtung nur parallel zu dieser Achse bewegt werden. Diese Ausgestaltung führt zu einer einfachen und unkomplizierten Ausgestaltung des Verfahrens, da ein Verfahren von Bauteilen lediglich in einer Richtung erfolgen muss. Natürlich kann es auch zusätzliche Bewegungen in anderen Achsen geben, sollte z.B. eine besondere Zierteilgeometrie dies erfordern.

Gemäß einer vorteilhaften Weiterbildung der erfindungsgemäßen Vorrichtung ist der Kern in der geschlossenen Stellung und in der geöffneten Stellung der Vorrichtung beweglich. Dies führt dazu, dass einerseits in der geschlossenen Stellung der Kern aus dem Rahmen bewegt werden kann und entsprechend durch einen anderen Kern ersetzbar ist, wie es zum Spritzgießen zweier entgegengesetzter Oberflächen eines Werkstücks in einer gemeinsamen Vorrichtung notwendig ist. Andererseits ist der Kern auch in der geöffneten Stellung beweglich, so dass der Beschneidevorgang durchführbar ist.

Vorzugsweise ist bei der erfindungsgemäßen Vorrichtung die Klemmeinrichtung unabhängig von dem ersten Werkzeug bewegbar, so dass ein einfaches Entfernen des Abfalls, der durch das Beschneiden anfällt, ermöglicht wird.

Ferner ist es bevorzugt, dass der Rahmen des zweiten Werkzeugs eine Aussparung aufweist, in der der bewegliche Kern aufgenommen ist, wobei die Aussparung der äußeren Umfangsform bzw. der Kontur des Zierteils entspricht.

Ferner weist gemäß einer bevorzugten Ausführungsform der vorliegenden Erfindung die Klemmeinrichtung eine Aussparung auf, die der äußeren Umfangsform bzw. der Kontur des Zierteils entspricht.

Weist sowohl der Rahmen des zweiten Werkzeugs die der Kontur des Zierteils entsprechende Aussparung auf als auch die Klemmeinrichtung, so fluchtet eine Kante der Aussparung in der Klemmeinrichtung, die dem Rahmen des zweiten Werkzeugs zugewandt ist, mit einer Kante der Aussparung des Rahmens des zweiten Werkzeugs, die der Klemmeinrichtung zugewandt ist. Diese Ausgestaltung dient primär der Ausbildung der Kanten als Schneidkanten, um ein Beschneiden des Zierteils zu ermöglichen und eine klar definierte Schnittkante zu erzielen.

Bei einer bevorzugten Ausführungsform der vorliegenden Erfindung bilden die Klemmeinrichtung und das erste Werkzeug zusammen einen Formenhohlraum und die Aussparung in der Klemmeinrichtung wird durch eine Wand begrenzt, die sich zu dem zweiten Werkzeug hin kegelförmig verjüngt. Eine solche Verjüngung ist beim Spritzgießen üblich und durch sie kann ein Hinterschnitt an dem Werkstück erzielt werden.

Alternativ kann sich die die Aussparung in der Klemmeinrichtung begrenzende Wand auch zu dem ersten Werkzeug hin kegelförmig verjüngen.

Entsprechend der Ausgestaltung der Verjüngung ist zum Beschneiden des Zierteils der Kern des zweiten Werkzeugs entgegen der Verjüngungsrichtung der die Aussparung begrenzenden Wand der Klemmeinrichtung bewegbar. Dadurch wird ermöglicht, dass ein Beschneiden des Zierteils in der gleichen Vorrichtung ermöglicht wird, wobei der gesamte formgebende Stempel bzw. der Kern als Stanzwerkzeug bzw. Beschneidewerkzeug dient. Ferner wird so möglich, das Zierteil trotz der hinterschnittenen Kante auf Endmaß zu schneiden, d.h. dass kein nachbearbeitendes Beschneiden mehr erforderlich ist.

Vorteilhafterweise weist die erfindungsgemäße Vorrichtung einen ersten Eingusskanal zum Einspritzen von Kunstharz in einen ersten Formenhohlraum, der in dem ersten Werkzeug angeordnet ist und einen zweiten Eingusskanal zum Einspritzen von Kunstharz in einen zweiten Formenhohlraum, der in dem zweiten Werkzeug angeordnet ist, auf.

Der erste Formenhohlraum kann zwischen dem ersten Werkzeug und einem durch einen ersten Kern des zweiten Werkzeugs gestützten Werkstück gebildet werden, wobei der zweite Formenhohlraum zwischen einem Werkstück und einem zweiten Kern des zweiten Werkzeugs gebildet werden kann.

Entsprechend dem Verfahren ist es ferner bevorzugt, dass der Kern entlang einer Achse beweglich ist und die Klemmeinrichtung und das erste Werkzeug relativ zu dem zweiten Werkzeug nur parallel zu dieser Achse beweglich sind. Dies führt zu einem einfachen unkomplizierten Aufbau der Vorrichtung, bei der lediglich eine Hubrichtung bzw. Bewegungsrichtung der beweglichen Teile erforderlich ist.

### Kurze Beschreibung der Zeichnungen

Weitere Vorteile und Weiterbildungen sowie Merkmale der vorliegenden Erfindung sind aus der folgenden genauen Beschreibung einer beispielhaften Ausführungsform unter Bezugnahme auf die begleitenden Zeichnungen ersichtlich.

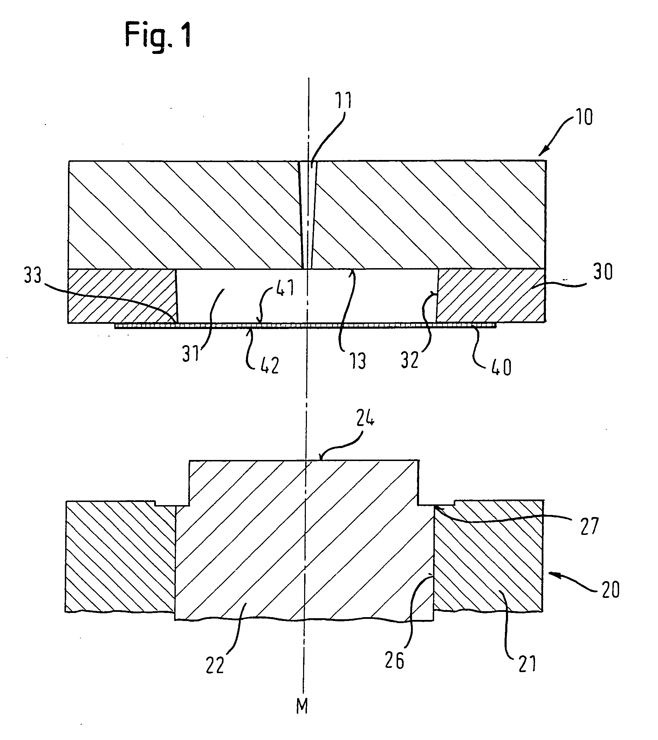

In den Figuren zeigen die Figuren 1-5 eine beispielhafte Ausführungsform einer Vorrichtung gemäß der vorliegenden Erfindung, wobei in der Sequenz der Figuren 1-5 verschiedene Stadien eines beispielhaften Verfahrens gemäß der vorliegenden Erfindung, das diese Vorrichtung verwendet, dargestellt sind.

Demzufolge sind in den verschiedenartigen Ansichten gleiche Teile durch gleiche Bezugszeichen gekennzeichnet.

### Beschreibung einer beispielhaften Ausführungsform

Bezugnehmend auf die Figuren 1-5 wird zunächst der Aufbau der Vorrichtung gemäß einer beispielhaften Ausführungsform der vorliegenden Erfindung erläutert.

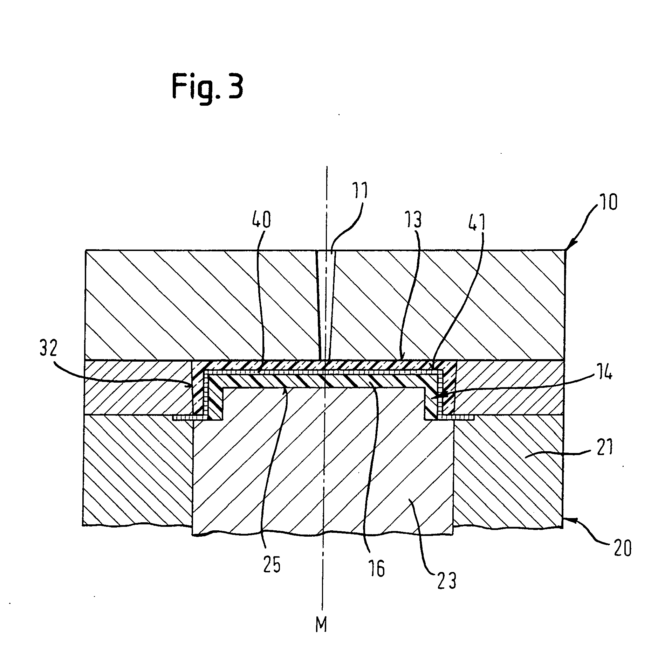

Die erfindungsgemäße Vorrichtung in Figur 1 umfasst ein erstes Werkzeug (10) und ein zweites Werkzeug (20). Das zweite Werkzeug (20) umfasst einen Rahmen (21) und einen ersten Kern (22). Der erste Kern (22) ist relativ zu dem Rahmen (21) entlang der Achse M bewegbar. Die Oberfläche (24) des Kerns (22) entspricht im Wesentlichen der dreidimensionalen Form des Dekorvorformlings, dessen Herstellung später erläutert werden wird. Wie ferner deutlich werden wird, dient die Beweglichkeit des Kerns (22) entlang der Achse M einerseits dem Wechsel bzw. Austausch des Kerns (22) mit einem zweiten Kern (23) (siehe Fig. 3), der in einem Spritzgießverfahren als Formstempel dient und daher eine formgebende Oberfläche (25) aufweist und andererseits dem Beschneiden des Zierteils vorzugsweise auf Endmaß.

In dem ersten Werkzeug (10) ist ein erster Eingusskanal (11) vorgesehen. Das zweite Werkzeug (20) weist ebenfalls einen Eingusskanal auf, der als zweiter Eingusskanal bezeichnet wird, jedoch in den Figuren nicht dargestellt ist.

Zwischen dem ersten Werkzeug (10) und dem zweiten Werkzeug (20) ist eine Klemmeinrichtung (30) angeordnet. Die Klemmeinrichtung (30) weist eine Aussparung (31) auf, die durch eine Wand (32) begrenzt ist. Die Aussparung (31) der Klemmeinrichtung (30) entspricht an einer Kante (33) der Aussparung, die dem zweiten Werkzeug (20) zugewandt ist, der Endkontur des herzustellenden Zierteils. Wie beispielsweise aus Figur 1 ersichtlich ist, ist ferner die Wand (32) der Klemmeinrichtung (30) von der Seite bzw. Kante, die dem ersten Werkzeug (10) zugewandt ist, zu der Kante bzw. Seite, die dem zweiten Werkzeug (20) bzw. dem Rahmen (21) zugewandt ist, verjüngt. Dadurch weist die Aussparung im dargestellten Querschnitt eine Kegelstumpfform auf.

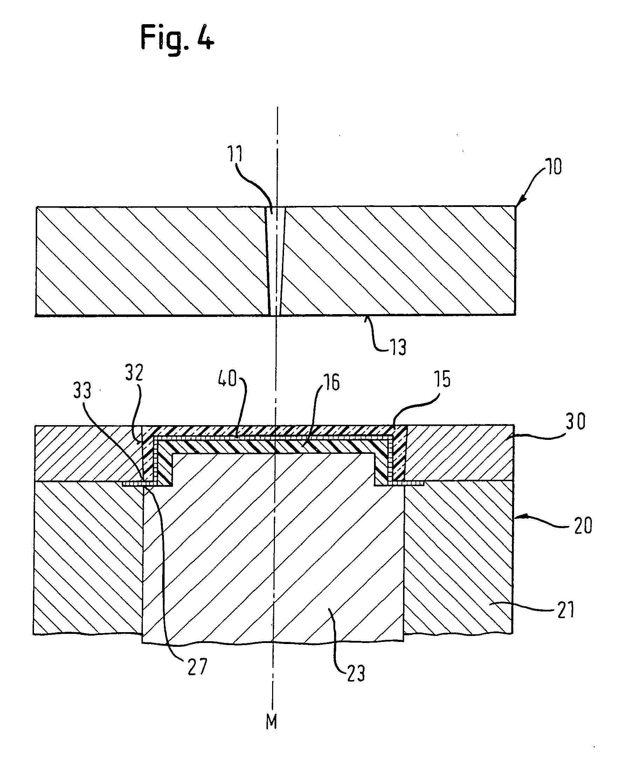

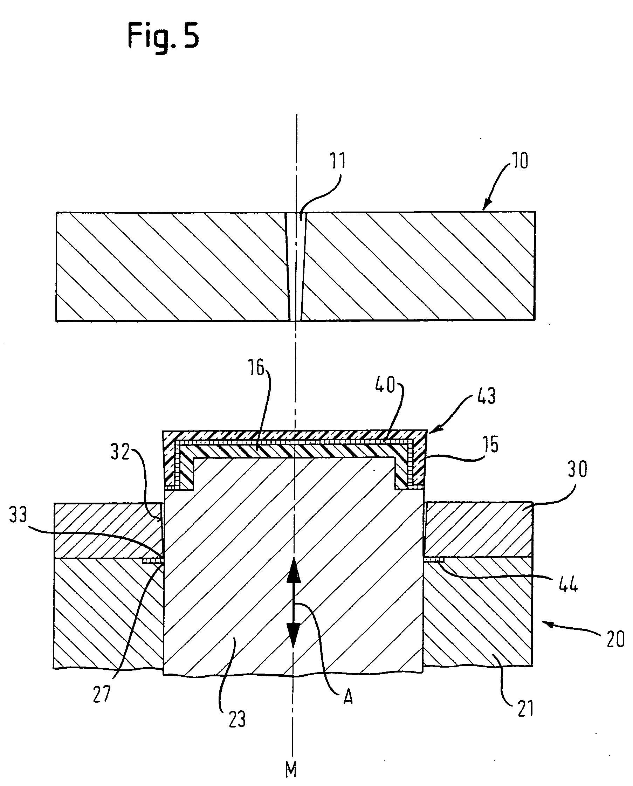

Sowohl die Klemmeinrichtung (30) als auch das erste Werkzeug (10) relativ zu dem zweiten Werkzeug (20) sind entlang der Achse M in zwei Richtungen, wie es durch den Doppelpfeil A in Figur 5 dargestellt ist, beweglich. Ferner ist, wie es aus Figur 4 deutlich wird, die Klemmeinrichtung (30) unabhängig von dem ersten Werkzeug (10) bewegbar.

Auch der Rahmen (21) des zweiten Werkzeugs (20) weist eine Aussparung (26) auf. In diese Aussparung (26) ist der Kern (22) bzw. (23) eingeführt und entlang dieser Aussparung ist er beweglich. Mit anderen Worten dient diese Aussparung (26) auch als Führung für den Kern. Darüber hinaus entspricht die Aussparung wenigstens an einer der Klemmeinrichtung zugewandten Kante (27) der Aussparung der Kontur bzw. dem Außenumfang des herzustellenden Zierteils und fluchtet daher mit der Kante (33) der Klemmeinrichtung (30).

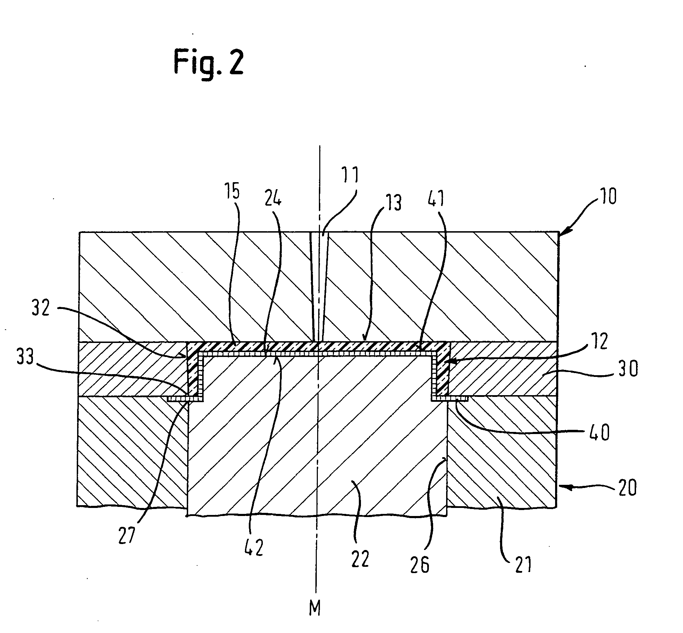

Durch die Beweglichkeit des ersten Werkzeugs (10) relativ zu dem zweiten Werkzeug (20) ist die Vorrichtung in eine geöffnete Stellung (siehe Figur 1, Figur 4 und Figur 5) und eine geschlossene Stellung (siehe Figur 2 und Figur 3) bringbar. In der geschlossenen Stellung, die in Figur 2 dargestellt ist, bildet der erste Kern (22) eine Auflagefläche (bzw. formgebende Fläche) für den Dekorrohling (40) und ein erster Formenhohlraum (12) wird zwischen dem Dekorrohling (40) und der Wand (32) der Klemmeinrichtung sowie einer Oberfläche (13) des ersten Werkzeugs gebildet. In diesen Formenhohlraum wird über den Eingusskanal (11) des ersten Werkzeugs (10) ein Spritzgießmaterial eingespritzt, um den Dekorrohling (40) zu überspritzen, wie es später näher beschrieben wird.

Ferner wird, wie es in Figur 3 dargestellt ist, der Kern gewechselt und der erste Kern (22) durch einen zweiten Kern (23) ersetzt. In dieser Stellung bildet der Kern (23) einen Formstempel und ein zweiter Formenhohlraum (14) ist zwischen der Oberfläche (25) des zweiten Stempels (23) und dem Dekorrohling (40) ausgebildet, in den durch den zweiten Eingusskanal ein weiteres Spritzgießmaterial eingespritzt wird, um den Dekorrohling (40) zu hinterspritzen.

Im Folgenden wird nun unter Bezugnahme auf die Verfahrenssequenzen, die in den Figuren 1-5 dargestellt sind, das Verfahren der vorliegenden Erfindung rein beispielhaft erläutert.

Zunächst wird, wie es in Figur 1 dargestellt ist, ein Dekorrohling (40) in die Vorrichtung eingelegt. Dabei befindet sich die Vorrichtung in der geöffneten Stellung, wobei sich das erste Werkzeug (10) sowie die Klemmeinrichtung (30) in Richtung der Achse M in einer obersten Position befinden. Darüber hinaus ist ein erster Kern (22) in dem Rahmen (21) des zweiten Werkzeugs angeordnet.

In einem nächsten Verfahrensschritt wird nun die Klemmeinrichtung (30) entweder zusammen mit dem ersten Werkzeug (10) oder unabhängig davon entlang der Achse M in Richtung des zweiten Werkzeugs (20) bewegt. Durch diese Bewegung erfolgt ein Umformen des Dekorrohlings (40), der eine Sichtseite (41) und eine Trägerseite (42) aufweist. Somit wird in der erfindungsgemäßen Vorrichtung zunächst ein Dekorvorformling ausgebildet. Die Klemmeinrichtung (30) wird so weit in Richtung des zweiten Werkzeugs (20) bewegt, bis ein Umfangsbereich (44)zwischen der Klemmeinrichtung (30) und dem Rahmen (21) des zweiten Werkzeugs (20) lagegenau festgelegt und eingeklemmt ist.

Wurde das erste Werkzeug (10) nicht gleichzeitig mit der Klemmeinrichtung (30) in Richtung des zweiten Werkzeugs (20) bewegt, wird dies in einem nachfolgenden Schritt durchgeführt, um die Vorrichtung in ihre geschlossene Stellung zu bringen, wie es in Figur 2 dargestellt ist. In der geschlossenen Stellung ist, wie es zuvor erwähnt wurde, ein erster Formenhohlraum (12) zwischen dem aus dem Dekorrohling (40) gebildeten Dekorvorformling (im Folgenden Werkstück 40), das heißt zwischen der Sichtseite (41) des Werkstücks (40) und der Wand (32) der Klemmeinrichtung (30) in Verbindung mit der Oberfläche (13) des ersten Werkzeugs (10) gebildet. In diesen Formenhohlraum wird nun ein vorzugsweise transparentes Kunstharz durch den Eingusskanal (11) eingespritzt und somit die Sichtseite des Werkstücks (40) überspritzt. Nach dem Aushärten der Überspritzung (15) wird, wie es in Figur 3 dargestellt ist, der Kern (22) entlang der Achse M nach unten aus dem Rahmen (21) des zweiten Werkzeugs (20) entfernt und durch den zweiten Kern (23) ersetzt. Dieses Wechseln kann beispielsweise durch eine Drehteller-, Schieber- oder Würfeltechnik erzielt werden.

Zwischen der Oberfläche (25) des zweiten Kerns (23) und der Trägerseite (42) des Werkstücks (40) wird dann ein zweiter Formenhohlraum (14) ausgebildet, wie es zuvor beschrieben wurde.

Ist der Kern (23) eingeführt und der Formenhohlraum (14) ausgebildet, wird ein Spritzgießmaterial durch den zweiten Eingusskanal in den Formenhohlraum (14) eingespritzt, um die Trägerseite des Werkstücks (40) zu hinterspritzen und eine Trägerschicht (16) auszubilden.

Im Anschluss daran wird, wie es in Figur 4 dargestellt ist, das erste Werkzeug (10) entlang der Achse M von dem zweiten Werkzeug (20) und der Klemmeinrichtung (30) wegbewegt, um die Vorrichtung in ihre geöffnete Position zu bringen. Auch in der geöffneten Position verbleibt der Umfangsbereich des Werkstücks (40) zwischen der Klemmeinrichtung (30) und dem Rahmen (21) eingeklemmt. Befindet sich die Vorrichtung in der in Figur 4 dargestellten Position, wird der Kern (23) in einer Richtung entlang der Achse M relativ zu dem Rahmen (21) zu dem ersten Werkzeug (10) hin bewegt. Da bei dieser Bewegung der Umfangsbereich des Werkstücks (40) noch immer zwischen der Klemmeinrichtung (30) und dem Rahmen (21) eingeklemmt bzw. festgelegt verbleibt, wird bei dieser Bewegung der eingeklemmte Umfangsbereich durch die Relativbewegung des verbleibenden Teils des Werkstücks, der innerhalb des Umfangsbereichs liegt, an den Kanten (27) und (33) des Rahmens (21) bzw. der Klemmeinrichtung (30) abgeschert, um so die Außenkontur des fertigen Zierteils (43), das auf diese Art und Weise auf Endmaß beschnitten werden kann, zu erstellen (siehe Fig. 5).

Wie es in Figur 5 ersichtlich ist und zuvor beschrieben wurde, verjüngt sich die Wand (32) der Klemmeinrichtung (30), die einen Seitenabschnitt der überspritzten Sichtseite des Zierteils (43) bildet, hin zu dem zweiten Werkzeug (20). Dadurch wird eine Art Hinterschnitt dieses Seitenabschnitts erzielt, was bei einem herkömmlichen Ausstanzen, nämlich einer Bewegung von oben auf das Zierteil auf einen Gegenstempel nicht erzielt werden könnte. Dies ist lediglich dadurch möglich, dass der Stempel in der Zeichnung nach oben in Richtung des ersten Werkzeugs (10) aus dem Rahmen (21) bewegt wird und so ein Beschneiden möglich wird.

Wäre alternativ die Verjüngung in umgekehrter Richtung ausgeführt, das heißt wäre die Aussparung (31) der Klemmeinrichtung (30) bzw. deren Wand (32) in Richtung des ersten Werkzeugs (10) verjüngt, so müsste der Stempel (22) in einer entgegengesetzten Richtung M, nämlich in der Zeichnung nach unten relativ zu dem Rahmen (21) bewegt werden, um ein derartiges Beschneiden zu ermöglichen.

Um den Abfall (44) aus der Vorrichtung zu entfernen, wird letztendlich die Klemmeinrichtung in Richtung des ersten Werkzeugs (10) bzw. in der Zeichnung nach oben bewegt, so dass der Abfall (44) bzw. der abgetrennte Teil des Werkstücks (40) aus der Vorrichtung entfernt werden kann.

Ferner wird durch die Relativbewegung (22) des Kerns nach dem Abschluss des Beschneidens das Zierteil (43) aus der erfindungsgemäßen Vorrichtung ausgeworfen und kann entsprechend zu einer weiteren Station, beispielsweise zum Verpacken, gefördert werden.

Die erfindungsgemäße Vorrichtung bzw. das erfindungsgemäße Verfahren ermöglichen es, auf einfache Art und Weise ein Zierteil (43) herzustellen, das sowohl auf seiner Sichtseite (41) überspritzt ist, als auch auf seiner Trägerseite (42) hinterspritzt ist. Ferner ermöglicht die vorliegende Erfindung eine einfache und unkomplizierte Vorrichtung bzw. ein entsprechendes Verfahren, bei der bzw. dem das Zierteil (43) entlang seines gesamten Außenumfangs bzw. seiner Kontur beispielsweise auf Endmaß beschnitten werden kann, was durch herkömmliche Stanzwerkzeuge aufgrund des inhärenten kegelförmigen bzw. verjüngten Abschnitts (Hinterschnitts) nicht möglich ist, so dass das Verfahren und die Vorrichtung der vorliegenden Erfindung eine Nachbearbeitung des Zierteils (43) auf Endmaß nicht erfordern. Ferner werden sämtliche Verfahrensschritte, nämlich das Umformen, das Über- und Hinterspritzen sowie das Beschneiden in einer einzigen Vorrichtung realisiert, bei der die Hauptteile, die oben erwähnt wurden, lediglich entlang einer Achse M oder parallel dazu beweglich sind. Dadurch wird ein sehr einfacher Aufbau realisiert, bei dem Bewegungen senkrecht oder schräg zu der Achse M, die einen komplizierteren Aufbau erfordern würden, nicht erforderlich sind.

Darüber hinaus dient bei der vorliegenden Erfindung der Kern (23) sowohl als Formstempel als auch als Stanzwerkzeug, wobei der gesamte Kern (23) als Stanzwerkzeug dient.

Obwohl die vorliegende Erfindung anhand einer rein beispielhaften Ausführungsform im Detail erläutert wurde, versteht sich, dass die vorliegende Erfindung nicht auf diese Ausführungsform begrenzt ist, sondern im Rahmen der folgenden Patentansprüche Modifikationen und Änderungen möglich sind.

## Patentansprüche

1. Verfahren zum Herstellen von Zierteilen (43), insbesondere für Fahrzeuge, umfassend die Schritte:
- Einlegen eines ebenen, biegsamen Dekorrohlings (40) mit einer Sichtseite (41) und einer Trägerseite (42) als Werkstück in eine Vorrichtung;
- Lagegenaues Festlegen des Werkstücks (40) in der Vorrichtung, wobei zumindest ein Teil des Umfangsbereichs (44) des Werkstücks eingespannt wird;
- Umformen des Werkstücks (40) in der Vorrichtung;
- Überspritzen der Sichtseite (41) des Werkstücks (40) mit Kunstharz in der Vorrichtung;
- Hinterspritzen der Trägerseite (42) des Werkstücks (40) in der Vorrichtung; und
- Beschneiden des Werkstücks über den gesamten Umfang durch eine Relativbewegung des festgelegten Umfangsbereichs (44) des Werkstücks zu dem innerhalb des Umfangsbereichs gelegenen verbleibenden Bereich des Werkstücks.

2. Verfahren nach Anspruch 1, bei dem der Dekorrohling (40) ein Holzfurnier, ein Steinfurnier oder eine Folie ist.

3. Verfahren nach einem der vorstehenden Ansprüche, bei dem das Beschneiden des Werkstücks (40) derart durchgeführt wird, dass das Werkstück nach dem Abschluss des Beschneidens durch die Relativbewegung ausgeworfen wird.

4. Verfahren nach einem der vorstehenden Ansprüche, bei dem die Relativbewegung entlang einer Achse (M) erfolgt und alle genannten beweglichen Teile der Vorrichtung nur parallel zu dieser Achse bewegt werden.

5. Vorrichtung zum Herstellen von Zierteilen (43), insbesondere für Fahrzeuge, umfassend
ein erstes Werkzeug (10);
ein zweites Werkzeug (20), das relativ zu dem ersten Werkzeug beweglich ist, so dass die Vorrichtung in eine geöffnete und eine geschlossene Stellung bringbar ist, wobei das zweite Werkzeug einen Rahmen (21) und einen relativ zu dem Rahmen beweglichen formgebenden, wechselbaren Kern (22,23) aufweist; und
eine Klemmeinrichtung (30), die derart angeordnet und beweglich ist, dass der gesamte Umfangsbereich (44) eines Werkstücks (40) durch die Klemmeinrichtung an dem Rahmen (21) des zweiten Werkzeugs (20) festlegbar ist.

6. Vorrichtung nach Anspruch 5, bei der der Kern (22,23) in der geschlossenen Stellung und der geöffneten Stellung beweglich ist.

7. Vorrichtung nach Anspruch 5 oder 6, bei der die Klemmeinrichtung (30) unabhängig von dem ersten Werkzeug (10) bewegbar ist.

8. Vorrichtung nach einem der Ansprüche 5 bis 7, bei der der Rahmen (21) des zweiten Werkzeugs (20) eine Aussparung (26) aufweist, in der der bewegliche Kern (22,23) aufgenommen ist, wobei die Aussparung der äußeren Umfangsform des Zierteils (43) entspricht.

9. Vorrichtung nach einem der Ansprüche 5 bis 8, bei der die Klemmeinrichtung (30) eine Aussparung (31) aufweist, die der äußeren Umfangsform des Zierteils (43) entspricht.

10. Vorrichtung nach Anspruch 9 in Abhängigkeit von Anspruch 8, bei der eine Kante (33) der Aussparung in der Klemmeinrichtung (30), die dem Rahmen (21) des zweiten Werkzeugs (20) zugewandt ist mit einer Kante (27) der Aussparung (26) des Rahmens des zweiten Werkzeugs, die der Klemmeinrichtung zugewandt ist, fluchtet und die Kanten (33,27) als Schneidkanten dienen.

11. Vorrichtung nach Anspruch 9, bei der die Klemmeinrichtung (30) und das erste Werkzeug (10) zusammen einen Formenhohlraum (12) bilden und sich eine, die Aussparung (31) in der Klemmeinrichtung begrenzende Wand (32) zu dem zweiten Werkzeug (20) hin kegelförmig verjüngt.

12. Vorrichtung nach Anspruch 9, bei der die Klemmeinrichtung (30) und das erste Werkzeug (10) zusammen einen Formenhohlraum (12) bilden und sich eine, die Aussparung (31) in der Klemmeinrichtung begrenzende Wand (32) zu dem ersten Werkzeug (10) hin kegelförmig verjüngt.

13. Vorrichtung nach Anspruch 11 oder 12, bei der zum Beschneiden des Zierteils der Kern (23) des zweiten Werkzeugs (20) entgegen der Verjüngung der die Aussparung (31) begrenzenden Wand (32) der Klemmeinrichtung (30) bewegbar ist.

14. Vorrichtung nach einem der Ansprüche 5 bis 13, bei der das erste Werkzeug (10) einen ersten Eingusskanal (11) zum Einspritzen von Kunstharz in einen ersten Formenhohlraum aufweist und bei der das zweite Werkzeug (20) einen zweiten Eingusskanal zum Einspritzen von Kunstharz in einen zweiten Formenhohlraum (13) aufweist.

15. Vorrichtung nach Anspruch 14, bei der der erste Formenhohlraum (12) zwischen dem ersten Werkzeug (10) und einem durch einen ersten Kern (22) des zweiten Werkzeugs (20) gestützten Werkstück (40) gebildet wird und der zweite Formenhohlraum (14) zwischen einem Werkstück (40) und einem zweiten Kern (23) des zweiten Werkzeugs (20) gebildet wird.

16. Vorrichtung nach einem der Ansprüche 5 bis 15, bei der der Kern (22, 23)entlang einer Achse (M) beweglich ist und die Klemmeinrichtung (30) und das erste Werkzeug (10) relativ zu dem zweiten Werkzeug (20) parallel zu dieser Achse beweglich sind.
